# EUROPEAN PATENT APPLICATION

(11) **EP 4 800 049 A1**
(43) Date of publication of application: **02.09.2026**
(21) Application number: 25161035.8
(22) Date of filing: 28.02.2025
(51) Int. Cl.: C08G 18/50, C08G 18/76, C08K 3/013, C08K 5/00, C08K 7/20, B29C 64/112

(54) **MULTI-AXIS ADDITIVE MANUFACTURING USING REACTIVE COMPOSITIONS**

(71) Applicant: Sika Technology AG, 6340 Baar (CH)
(72) Inventor: KOCH, Reto, 8967 Widen (CH); LIANG, Shuyu, 8048 Zürich (CH); CHOFFAT, Fabien, 8048 Zürich (CH)
(74) Representative: Sika Patent Attorneys

(57) **Abstract**

The present invention relates to the use of a curable polymeric binder composition for the manufacture of 3D articles by an additive manufacturing process comprising applying the curable polymeric binder composition with a movable print head of multi-axis additive manufacturing device, the movable print head having a discharge nozzle for the layer-by-layer application of the curable polymeric binder composition, wherein the curable polymeric binder composition exiting from the discharge nozzle has a viscosity between 3000 and 50000 Pa·s, preferably 4000 and 30000 Pa·s, more preferably 5000 and 20000 Pa·s, wherein the viscosity is measured 5 seconds after the composition exits the discharge nozzle on a plate-plate rheometer at and a constant temperature of 20°C and 50% relative humidity.

The use according to the invention enables 3D printing of thermoset materials with unprecedented flexibility and structural complexity.

## Description

### Technical field

The invention relates to the use of a curable polymeric binder composition for the manufacture of 3D articles by an additive manufacturing process. The invention relates particularly to this use employing multiple-component polyurethane compositions, which can be cured at room temperature or elevated temperature.

### Background art

Additive manufacturing (AM) techniques are widely used in various industries to create physical prototypes as well as end-use parts with an exceptional degree of creative freedom. According to ISO 52900 standard, AM is a "process of joining materials to make parts from 3D model data, usually layer upon layer". AM techniques provide an alternative to conventional manufacturing processes, in which, for example, material is molded or subtracted by milling to create a three-dimensional (3D) object.

Generally, in an AM process a 3D article is manufactured using a shapeless material (e.g. liquids, powders, granules, pastes, etc.) and/or a shape-neutral material (e.g. bands, wires, filaments) that is subjected to chemical and/or physical processes (e.g. melting, polymerization, sintering, curing or hardening). The main categories of additive manufacturing technologies include VAT photopolymerization, material extrusion, material jetting, binder jetting, powder bed fusion, direct energy deposition, and sheet lamination techniques. Additive manufacturing is also known as rapid prototyping, on-demand manufacturing, digital fabrication, solid freeform manufacturing, or 3D printing.

In an AM process, the material is deposited, applied or solidified under computer control based on a digital model of the 3D object to be produced, to create 3D object. The digital model of the 3D article can be created, for example, by using a CAD software or a 3D object scanner. The deposition, application and/or consolidation of the material, for example a curable composition, is carried out in particular on the basis of a data model of the object to be generated and in particular layer-by-layer.

Most commonly used AM printing materials include thermoplastics such as acrylonitrile butadiene styrene copolymer (ABS), polylactic acid (PLA), or glycol-modified polyethylene terephthalate (PETG). Such materials are applied in molten state and readily solidify after printing, thus creating a 3-dimensional object.

There have also been some attempts to use chemically curable polymer compositions as printing materials in an AM process with the objective of improving the chemical and physical properties of the prepared 3D objects. The chemical basis for such printing materials is, for instance, RTV-2 silicones, or multiple-component epoxy and polyurethane compositions. Multiple-component reactive compositions have some advantages when used in 3D printing processes since the highly reactive constituents, such as curing agents and binders, can be provided in separate components and the curing process begins only after mixing of the two components with each other. In theory, an ideal curable material for 3D printing process would cure rapidly and enable printing with high speeds. The applied material should also cure homogeneously without forming gradients in the layers and independently on external curing factors, particularly air humidity.

In practice, providing an optimized polymer-based chemically curable polymeric binder material for 3D printing having all desired properties has turned out to be very challenging. Fast curing multiple-component compositions are relatively easy to formulate, and the cured 3D printed objects also exhibit improved chemical and physical properties compared to those obtained from non-reactive materials. However, the curing reactions of multiple-component compositions normally begin immediately after mixing of the components with each other resulting in rapid increase in the viscosity of the material, which complicates controlled output of the material from a print head or could even result in blocking of the print head. Furthermore, a certain dwell time in a mixer is required to provide a homogeneously mixed material. Due to the required fast chemical curing process, the materials have to be highly optimized in terms of curing rate and application properties, such as viscosity and thixotropy, in order to be useful in AM processes.

Nevertheless, many attempts to employ curable organic binder materials for 3D printing have been successfully implemented recently, as for example disclosed in WO 2021/001479 A1 or WO 2020/127484 A1.

However, AM processes using curable polymeric binder compositions are somewhat limited still. First of all, the currently known processes focus on relatively simple additive manufacturing devices where the printing nozzle can be moved in 3 axes, i.e., across the X, Y, and Z spatial axes. While such a setup allows for building of relatively simple 3-dimensional objects, more complex objects, for example with overhanging parts, orifices, or other complex geometries, cannot be easily created. The same is true for large scale objects with high layer thickness. Only a few publications disclose improved AM processes that allow the creation of geometrically more demanding objects. For example, EP4153398A1 discloses a 3D printing process and a polyurethane-based reactive material suitable therefore that allows producing objects with overhangs. However, also this process does not make highly detailed objects printed from curable polymeric binder compositions accessible, similar to what is possible nowadays when using thermoplastic printing materials.

There is thus a need for an improved AM process allowing the creation of highly detailed, geometrically complex and/or large-scale objects, while using curable polymeric binder compositions that cure into thermoset materials.

### Disclosure of the invention

It is an object of the present invention to provide a process for additive manufacturing using curable polymeric binder compositions, which extends the current state-of-the-art of 3D printing using thermoset materials and allows access to more detailed and complex printed objects.

Particularly, the process should involve a multi-axis additive manufacturing device with a print head that is moveable at least along 4 axes, for example 3 lateral axes (X, Y, and Z in the Cartesian coordinates) and additionally at least one rotational axis, wherein a curable polymeric binder composition should be employed that is suitable for use in such a device.

Surprisingly, it was found that these objects can be achieved with the use according to independent claim 1.

Specifically, according to the invention, the use of a curable polymeric binder composition for the manufacture of 3D articles by an additive manufacturing process is provided, comprising applying the curable polymeric binder composition with a movable print head of multi-axis additive manufacturing device, the movable print head having a discharge nozzle for the layer-by-layer application of the curable polymeric binder composition, wherein the curable polymeric binder composition exiting from the discharge nozzle has a viscosity between 3000 and 50000 Pa·s, preferably 4000 and 30000 Pa·s, more preferably 5000 and 20000 Pa·s, and preferably has a measured sagging resistance class higher than 3, more preferably higher than 2, wherein
- the viscosity is measured 5 seconds after the composition exits the discharge nozzle on a plate-plate rheometer at a constant temperature of 20°C and 50% relative humidity;
- the sagging resistance class is determined according to the method described in the description.

As it turned out, the use of a curable polymeric binder composition for the manufacture of 3D articles by an additive manufacturing process, comprising applying the curable polymeric binder composition with a movable print head of multi-axis additive manufacturing device, is possible when the curable polymeric binder compositions satisfy certain defined conditions, in particular regarding initial viscosity and preferably sagging resistance. It was surprisingly found that a curable binding material satisfying these conditions can successfully be used on a multi-axis additive manufacturing device and allows the production of objects of higher complexity and/or larger scale.

Furthermore, preferred embodiments of the curable polymeric binder compositions used in this process, more specifically multiple-component polyurethane compositions, were also found out exhibit a favorable curing behavior, which makes them especially suitable for use in high-speed 3D printing applications on multi-axis additive manufacturing devices. Particularly, the suggested and preferred multiple-component polyurethane compositions used as polymeric binder composition were found to have a sufficient open time, which enables effective mixing of the first and second components in a mixer without a significant change in the viscosity of the mixed composition followed by rapid curing reaction enabling high printing speed and high layer thickness. The curing behavior of the preferred multiple-component polyurethane composition was found out to be easily adjustable by selection of the type and amount of the polyol(s) **PO** and especially without use of catalysts, particularly without using complexed metal catalysts. Especially preferred embodiments additionally employ a latent curing agent **CA,** which further improve the curing behavior and the quality of the 3D printing process and the thus obtained 3D-printed object.

Further aspects are described below and are subject of the further independent claims. Particularly preferred embodiments are outlined throughout the description and the dependent claims.

### Ways of carrying out the invention

A first aspect of the present invention is directed to the use of a curable polymeric binder composition for the manufacture of 3D articles by an additive manufacturing process comprising applying the curable polymeric binder composition with a movable print head of multi-axis additive manufacturing device, the movable print head having a discharge nozzle for the layer-by-layer application of the curable polymeric binder composition, wherein the curable polymeric binder composition exiting from the discharge nozzle has a viscosity between 3000 and 50000 Pa·s, preferably 4000 and 30000 Pa·s, more preferably 5000 and 20000 Pa·s, and preferably a measured sagging resistance class higher than 3, more preferably higher than 2, wherein
- the viscosity is measured 5 seconds after the composition exits the discharge nozzle on a plate-plate rheometer at a constant temperature of 20°C and 50% relative humidity;
- the sagging resistance class is determined according to the method described in the description.

More specifically and in particular, the viscosity as described above is measured 5 seconds after the composition exits the discharge nozzle on a thermostated plate-plate rheometer with a plate diameter of 25 mm and a plate spacing of 2.7 mm at a circular frequency of 6 rad s-1 (0.95 Hz), amplitude gamma 0.2% and a constant temperature of 20°C and 50% relative humidity.

The term "multi-axis additive manufacturing device" refers to an additive manufacturing device having a moveable print head that is able to move at least along 4 axes, for example 3 lateral axes (X, Y, and Z in the Cartesian coordinates) and additionally at least one rotational axis, preferably at least 2 rotational axes. Common 3-axis devices are not considered multi-axis additive manufacturing device according to this invention.

The term "sagging resistance" refers to the resistance of a curable material to sagging or flowing downwards when freshly applied onto a vertical or inclined surface before it is partially or fully cured. Sagging resistance is directly dependent on the thixotropic properties of the curable material.

In preferred embodiments, the multi-axis additive manufacturing device is a four-axis, a five-axis, or a six-axis additive manufacturing device. Preferably, these axes include 3 lateral axes (X, Y, and Z in the Cartesian coordinates) and additionally at least 1 rotational axis, preferably 2 or 3 rotational axes, most preferably 2 rotational axes. In these embodiments the printing head of the device can not only move in all 3 Cartesian coordinates, but also rotate in 1 to 3, preferably 2 directions. In the same or other embodiments, additional rotational axes can be present at a base plate onto which the object is printed. These embodiments enable even more complex object geometries.

It is preferred that the curable polymeric binder composition has a pot life which is adjusted to the specific printing process. In other words, the curable polymeric binder composition should have a sufficiently low viscosity, yet a sufficient high thixotropy when being printed, but afterwards cure fast enough to allow for a sufficiently fast printing process, but with a sufficiently long pot life that the material in a previously applied layer is still able to form an adhesive bond when the next layer is applied onto the previous layer. In some embodiments, the material of the previously applied layer can be fully cured when the next layer of material is applied thereon. This is especially possible when using multi-component polyurethane compositions as curable polymeric binder composition.

In other embodiments, the material of the previously applied layer is not yet fully cured or not cured at all when the next layer of material is applied thereon. These embodiments are often advantageous for the interlayer adhesion, but not necessary for every curable polymeric binder composition.

The "layer cycle time" is defined as the time elapsed before the next layer of material in applied onto a previously applied layer of material. Generally speaking, "pot life" is understood as the time within which, after mixing the reactive components, the curable composition can be processed before the viscosity resulting from the progression of the crosslinking reaction has become too high for further processing, which includes the formation of an adhesive bond to adjacent layers of the 3D printing process.

Accordingly, in preferred embodiments, the pot life of the curable polymeric binder composition exiting from the discharge nozzle is at most 5 times, preferably at most 3 times, more preferably at most 2 times, as long as the layer cycle time, wherein the pot life is defined as the time during which the curable polymeric binder composition after exiting the discharge nozzle reaches a viscosity of 70000 Pa·s, and wherein the cycle time is the time that passes until an additional portion or layer of curable polymeric binder composition is applied onto a previously deposited portion or layer of curable polymeric binder composition.

In preferred embodiments of the use according to the present invention, the curable polymeric binder composition is selected from multi-component compositions based on reactive polyurethane compositions, reactive epoxy resin compositions, reactive silicone compositions, or reactive (meth)acrylate compositions.

In particular, the curable polymeric binder composition is obtained by mixing a first component **A** with a second component **B** and optionally with a third component **C** in a mixer, which is in fluid communication with the discharge nozzle. This means that the curable polymeric binder composition comprises at least 2 components **A** and **B,** and optionally a third component **C,** which can be stored individually but react with each other upon mixing and thus forming the curable polymeric binder composition.

For example, in case the curable polymeric binder composition is a reactive polyurethane composition, component **A** can be a polyol component, while component **B** can be a polyisocyanate component. In the same or other embodiments, component **C** can be a second polyol component or a catalyst component.

For example, in case the curable polymeric binder composition is a reactive silicone composition, component **A** can be a silicone resin component containing polydiorganosiloxane polymers, while component **B** can be a silicone hardener component containing crosslinkers and/or catalyst. In the same or other embodiments, component **C** can be a catalyst component.

For example, in case the curable polymeric binder composition is a reactive (meth)acrylate composition, component **A** can contain (meth)acrylate monomers and optionally (meth)acrylate-functional polymers, while component **B** can be an activator component.

For example, in case the curable polymeric binder composition is a reactive epoxy resin composition, component **A** can be an epoxy resin component, while component **B** can be an epoxy hardener component.

In preferred embodiments, the curable polymeric binder composition is a reactive polyurethane composition comprising at least two components **A** and **B.**

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties. The molecular weight can be determined by conventional methods, preferably by gel permeation-chromatography (GPC) using polystyrene as standard, styrene-divinylbenzene gel with porosity of 100 Angstrom, 1000 Angstrom and 10000 Angstrom as the column, and in particular, depending on the molecule, tetrahydrofuran as a solvent, at a temperature of 35°C or 1,2,4-trichlorobenzene as a solvent, at 160 °C.

Furthermore, the expression "tetra- or higher functional" is understood to mean that a compound, for example, a polyol, has an average at least four functional groups, such as hydroxyl groups, per molecule.

An isocyanate is called "aliphatic" when its isocyanate group is directly bound to an aliphatic, cycloaliphatic or arylaliphatic moiety. The corresponding functional group is therefore called an aliphatic isocyanate group. Furthermore, an isocyanate is called "aromatic" when its isocyanate group is directly bound to an aromatic moiety. The corresponding functional group is therefore called an aromatic isocyanate group.

Particularly, the curable polymeric binder composition, preferably the multiple-component polyurethane composition in its cured state can be obtained by mixing the components of the multiple-component polyurethane composition of the present invention, particularly the first component **A** and the second component **B,** with each other and letting the thus obtained curable composition cure, especially at normal room temperature.

In especially preferred embodiments, the curable polymeric binder composition is a reactive polyurethane composition comprising a first component **A** and a second component **B,** wherein the first component **A** comprises:
a1) At least one polyol **PO** having an average hydroxyl number determined according to ISO 4629-2:2016 standard of 350 - 1500 mg KOH/g, preferably 450 - 1000 mg KOH/g and the second component **B** comprises:
b1) At least one aromatic polyisocyanate **PI.**

Preferably, the first component **A** comprises at least 10 wt.-%, preferably at least 20 wt.-%, in particular at least 30 wt.-% of the at least one polyol **PO,** based on component **A.**

In some preferred embodiments, the at least one polyol **PO** has a number average molecular weight (Mₙ) determined by gel permeation-chromatography (GPC) using polystyrene as standard in the range of 150 - 15000 g/mol, preferably 250 - 12000 g/mol, more preferably 300 - 10000 g/mol.

The at least one polyol **PO** has at least one tertiary amine group, preferably one or two tertiary amine groups, particularly exactly two tertiary amine groups.

The term "tertiary amine group" refers in the present disclosure to an amine group, which is connected to three organic moieties, two or three of which may also be part of one or more rings and carries no hydrogen atoms.

Particularly, the at least one polyol **PO** may be a compound of formula (I) 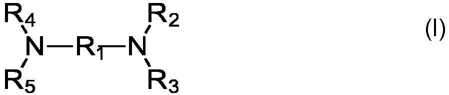 where R₁ represents a linear or branched alkyl group with 2 to 12 carbon atoms, preferably 2 to 8 carbon atoms and
R₂, R₃, R₄, and R₅ each represent linear or branched alkyl group with 2 to 18 carbon atoms, preferably 2 to 12 carbon atoms, substituted with one or more hydroxy groups and optionally containing one or more ether groups.

Suitable polyols of formula (I) are commercially available, for example, under the trade name of Dytek^{®} (from Invista), Lupranol^{®} (from BASF), Desmophen^{®} (from Covestro), and Voranol^{®} (from Dow).

In embodiments, the proportion of the at least one polyol **PO** makes up at least at least 35 wt.-%, preferably at least 50 wt.-%, more preferably at least 75 wt.-%, still more preferably at least 90 wt.-%, of the total weight of all polyols contained in the first component A of the multiple-component polyurethane composition.

In exemplary embodiments, the at least one polyol **PO** comprises at least one alkoxylated alkylene diamine **PO1,** preferable selected from N,N,N',N'-tetrakis(2-hydroxyethyl)ethylenediamine, N,N,N',N'-tetrakis(2-hydroxypropyl)ethylenediamine, 1,1',1",1‴-((2-methylpentane-1,5-diyl)bis(azanetriyl))tetrakis(propan-2-ol), 3,3',3",3‴-((2-methylpentane-1,5-diyl)bis(azanetriyl))tetrakis(propane-1,2-diol), and 4-[8-hydroxy-3-(2-hydroxypropyl)-5-methyl-6-oxa-3-azanonyl]-4-aza-2,6-heptanediol, and 1-({3-[bis(2-hydroxypropyl)amino]-2-tolyl}(2-hydroxypropyl)amino)-2-propanol.

The expression at least one compound X comprises at least one compound XN", such as "the at least one polyol **PO** comprises at least one alkoxylated alkylene diamine **PO1",** is understood to mean that the composition contains at least one compound XN as representative of the at least one compound X, such as at least one alkoxylated alkylene diamine **PO1** as representative of the at least one polyol **PO**.

In embodiments, the at least one polyol **PO** may comprise at least 15 wt.-%, particularly at least 35 wt.-%, especially at least 50 wt.-%, of the at least one alkoxylated alkylene diamine **PO1**, based on the total weight of all polyols **PO** in the first component A of the multiple-component polyurethane composition.

In exemplary embodiments, the at least one polyol **PO** is an alkoxylated alkylene diamine, preferable selected from N,N,N',N'-tetrakis(2-hydroxyethyl)ethylenediamine, N,N,N',N'-tetrakis(2-hydroxypropyl)ethylenediamine, 1,1',1",1‴-((2-methylpentane-1,5-diyl)bis(azanetriyl))tetrakis(propan-2-ol), 3,3',3",3‴-((2-methylpentane-1,5-diyl)bis(azanetriyl))tetrakis(propane-1,2-diol), and 4-[8-hydroxy-3-(2-hydroxypropyl)-5-methyl-6-oxa-3-azanonyl]-4-aza-2,6-heptanediol, and 1-({3-[bis(2-hydroxypropyl)amino]-2-tolyl}(2-hydroxypropyl)amino)-2-propanol.

In preferred embodiments of the curable polymeric binder composition, preferably the multiple-component polyurethane composition, the first component **A** and/or the third component **C** comprises at least one latent curing agent **CA,** preferably a latent polyamine curing agent.

The term "latent curing agent" denotes a chemical compound that is able to react with a constituent of component **B,** but predominantly or exclusively reacts after activation of the latent curing agent. The term "activation" means for example and preferably a thermal activation, effected by reaching a certain temperature threshold in the mixture of first component **A** and/or the third component **C** with component **B.**

Preferably, the latent curing agent **CA** is a latent polyamine curing agent which can react with isocyanate groups. However, the amine groups must not be immediately reactive when in contact with the isocyanate groups, but predominantly or exclusively after activation. Most preferred, this activation is a temperature-controlled activation.

Preferably, said latent curing agent **CA** has an activation temperature of at least 50 °C, preferably at least 65 °C. In particular, the activation temperature is between 50 °C and 150 °C, in particular between 65 °C and 130 °C, especially between 70 °C and 110 °C.

Most preferably, said latent curing agent **CA** is a polyamine with a melting point at standard pressure of between 40 °C and 150 °C, in particular between 65 °C and 130 °C, especially between 70 °C and 110 °C. With this property, the polyamine remains solid (and thus virtually unreactive, or only partially reactive on the surface of the solid particles) until the composition, due to exothermic curing reactions beginning after application, heats up internally above the melting and thus activation temperature of the latent curing agent **CA**. Once this process commences, the molten polyamine reacts very fast with the isocyanate groups and leads to an increase curing rate of the applied mixed curable composition.

In especially preferred embodiments, the latent curing agent **CA** is selected from non-modified and modified aliphatic, aromatic, and cycloaliphatic polyamines, preferably from non-modified and modified aliphatic, aromatic and cycloaliphatic polyamine adducts, in particular amino-functional epoxy adducts.

In especially preferred embodiments, the latent curing agent **CA** is an epoxy adduct of an aliphatic polyamine having at least one secondary amine group.

In preferred embodiments, the proportion of the at least one latent curing agent **CA** makes up between 0.1 wt.-% and 4wt.-%, preferably between 0.25 wt.-% and 3 wt.-%, more preferably between 0.5 wt.-% and 2 wt.-%, of the first component **A** of the curable polymeric binder composition, preferably the multiple-component polyurethane composition.

Suitable and preferred such latent curing agent **CA** are for example Ancamine^{®} 2014FG and Ancamine^{®} 2014AS from Evonik.

Suitable polyisocyanates for use as the at least one aromatic polyisocyanate **PI** include, for example, monomeric, oligomeric, and polymeric polyisocyanates and derivatives of these.

The term "monomeric polyisocyanate" refers in the present disclosure to an organic compound with two or more isocyanate groups that are separated by a divalent hydrocarbon radical. Particularly, a monomeric polyisocyanate contains no urethane groups and oligomers or polymer products of polyisocyanate monomers, such as adducts of monomeric polyisocyanates, are not considered to be "monomeric polyisocyanates" in the context of the present invention.

Furthermore, the term "oligomer" designates a compound built up through the linkage of a few monomers, for example dimers, trimers, or tetramers. Term "polyisocyanate oligomer" can designate an individual oligomer or a mixture of oligomers of monomeric polyisocyanates, particularly oligomers of monomeric diisocyanates, wherein these oligomers can be built up of like or different monomeric polyisocyanates.

In embodiments, the at least one aromatic polyisocyanate **PI** is selected from monomeric di- and triisocyanates and oligomers, polymers, and derivatives of monomeric di- and triisocyanates, and mixtures thereof.

Examples of suitable aromatic monomeric polyisocyanates include, for example, perhydro-2,4'- and -4,4'-diphenylmethane diisocyanate (HMDI or H12MDI) and mixtures of these isomers, m- and p-xylylene diisocyanate (m- and p-XDI) and mixtures of these isomers, m- and p-tetramethyl-1,3- and 1,4-xylylene diisocyanate (m- and p-TMXDI) and mixtures of these isomers, bis(1-isocyanato-1-methylethyl)naphthalene, 2,4- and 2,6-tolylene diisocyanate and mixtures of these isomers (TDI), 4,4'-diphenylmethane diisocyanate, optionally with proportions of 2,4'- and/or 2,2'-diphenylmethane diisocyanate (MDI), 1,3- and 1,4-phenylene diisocyanate (PDI) and mixtures of these isomers, naphthalene 1,5-diisocyanate (NDI), 3,3'-dimethyl-4,4'-diisocyanatobiphenyl (TODI), and dianisidine diisocyanate (DADI). Furthermore, a person skilled in the art knows that the technical grade products of diisocyanates may frequently contain isomer mixtures or other isomers as impurities.

These are commercially available, for example, under the trade names of Lupranat^{®} (from BASF), Desmodur (from Covestro), Cosmonate^{®} (from Mitsui Chemical), Millionate^{®} (from Tosoh), Wannate^{®} (from Wanhua chemical), and Duranate^{®} (from Asahi Kasei).

Further examples of suitable aromatic polyisocyanates include oligomers, polymers, and derivatives of aromatic monomeric polyisocyanates containing isocyanurate, iminooxadiazindione, biuret, allophanate, carbodiimide, uretonimine or oxadiazine-trione groups.

Especially suitable aromatic oligomeric and polymeric polyisocyanates and derivatives of aromatic monomeric polyisocyanates include those based on MDI and TDI. Oligomeric and polymeric polyisocyanates are typically mixtures of substances having different degrees of oligomerization/polymerization and/or chemical structures and have an average isocyanate functionality determined according to ISO 14896-2009 standard method A in the range of 2.1 - 4.0.

Preferably, the polyisocyanate comprises diphenylmethane 4,4'- or 2,4'- or 2,2'-diisocyanate or any mixture of these isomers (MDI).

Preferably, the polyisocyanate is MDI or a mixture of MDI and MDI homologs (polymeric MDI or PMDI) or a mixture of MDI and oligomers, polymers or derivatives derived therefrom.

More preferably, the polyisocyanate is a form of MDI which is liquid at room temperature, especially having a high content of diphenylmethane 4,4'-diisocyanate. What is called "liquid MDI" is either diphenylmethane 4,4'-diisocyanate liquefied by partial chemical modification - especially carbodiimidization or uretonimine formation - or it is a mixture of diphenylmethane 4,4'-diisocyanate with other MDI isomers (2,4'-diphenylmethane diisocyanate and/or 2,2'-diphenylmethane diisocyanate), or with MDI oligomers or MDI homologs, that has been brought about selectively by blending or results from the production process.

Commercially available versions of these include, for example, mixtures of MDI and MDI-homologs (polymeric of MDI or PMDI), which are commercially available under the trade name of Desmodur^{®} VL 50, Desmodur^{®} VL R10, Desmodur^{®} VL R20, Desmodur^{®} VH 20 N and Desmodur^{®} VKS 20F, and Desmodur^{®} 44 V 20 L NP (all from Covestro); Isonate^{®} M 309, Voranate^{®} M 229 and Voranate^{®} M 580 (all from Dow Chemicals); Lupranat^{®} M 10 R (from BASF); and TDI-Oligomers such as Desmodur^{®} IL (from Covestro) as well as mixtures of isocyanurates based on TDI/HDI, for example Desmodur^{®} HL (von Covestro).

With these polyisocyanates, particularly good processing properties and particularly high strengths are obtained.

Furthermore suitable are at standard room temperature liquid forms of MDI ("modified MDI"), which are mixtures of MDI with MDI derivatives, such as MDI-carbodiimides or MDI-uretonimines or MDI-urethanes that are commercially available under the trade names of Desmodur^{®} CD, Desmodur^{®} PF, Desmodur^{®} PC (all from Covestro) or Isonate^{®} M 143 (from Dow Chemicals).

In embodiments, the at least one aromatic polyisocyanate **PI** has an isocyanate content determined according to ISO 11909:2007 standard of 15 - 50 wt.-%, preferably 20 - 45 wt.-%, more preferably 20 - 40 wt.-% and/or a viscosity determined according to ISO 3219-1:2021 standard of 100 - 500 mPa·s, preferably 150 - 400 mPa·s, more preferably 150 - 350 mPa·s and/or an average isocyanate functionality determined according to ISO 14896-2009 standard method A of 2.0 - 4.0, preferably 2.2 - 3.8, more preferably 2.4 - 3.2.

In embodiments, the at least one aromatic polyisocyanate **PI** is selected from monomers, oligomers, polymers, and derivatives of methylene diphenyl diisocyanate (MDI) and monomers, oligomers, polymers, and derivatives of toluene diisocyanate (TDI). Most preferred are monomers, oligomers, polymers, and derivatives of methylene diphenyl diisocyanate (MDI).

In embodiments, the proportion of monomers of methylene diphenyl diisocyanate (MDI) and/or proportion of monomers of toluene diisocyanate (TDI) is not more than 75 wt.-%, preferably not more than 50 wt.-%, more preferably not more than 35 wt.-%, even more preferably not more than 25 wt.-%, based on the total weight of the at least one aromatic polyisocyanate **PI.**

It may further be preferred that the sum of all isocyanate groups that do not originate from the at least one aromatic polyisocyanate **PI** is not more than 5 %, especially not more than 2 %, particularly not more than 1 %, based on the sum of all isocyanate groups contained in the multiple-component polyurethane composition.

In embodiments, the molar ratio of all isocyanate groups in the second component **B** to all hydroxyl groups in the first component **A** is in the range of 0.8 - 1.5, preferably 0.9 - 1.2.

The curable polymeric binder composition, in particular the multiple-component polyurethane composition, may still contain further constituents and additives, such as solvents, plasticizers and/or extenders, pigments, rheology modifiers, waxes, drying agents, such as zeolites or molecular sieves, stabilizers against oxidation, heat, light and UV radiation, flame-retardants, such as hydroxides or hydrates, particularly hydroxides or hydrates of aluminum or magnesium, especially aluminum trihydrate (ATH) or magnesium hydroxide (MDH), fillers, such as inorganic powders and hollow microspheres, and surface-active substances, especially wetting agents and defoamers.

In preferred embodiments, the curable polymeric binder composition, in particular the multiple-component polyurethane composition further comprises at least one rheology modifier **RM** and/or at least one plasticizer **PL.** Preferably, the curable polymeric binder composition, in particular the multiple-component polyurethane composition comprises both at least one rheology modifier **RM** and at least one plasticizer **PL.**

In exemplary embodiments, the at least one rheology modifier **RM** is selected from urea compounds, polyamide waxes, bentonites, and fumed silica, preferably fumed silica, particularly surface modified fumed silica, especially hydrophobic fumed silica.

The use of at least one rheology modifier **RM** enables in preferred embodiments a high thixotropy, which is highly beneficial for a 3D printing process of the material.

Preferably, at least one of the first component A and the second component **B,** preferably both, of the curable polymeric binder composition, in particular the multiple-component polyurethane composition, contain at least one rheology modifier **RM.**

Preferred as rheology modifier **RM** is fumed silica, particularly surface modified fumed silica, especially hydrophobic fumed silica.

In preferred embodiments, the curable polymeric binder composition, in particular the multiple-component polyurethane composition may comprise 0.1 - 25 wt.-%, preferably 1.5 - 20 wt.-%, more preferably 5 - 20 wt.-% of the at least one rheology modifier **RM,** preferably fumed silica, more preferably surface modified fumed silica, particularly hydrophobic fumed silica, based on the total composition.

In especially preferred embodiments, the curable polymeric binder composition, in particular the multiple-component polyurethane composition, comprises rheology modifier **RM,** in particular fumed silica, in component **A** in an amount of between 2 and 15 wt.-%, in particular between 4 and 10 wt.-%, based on component **A** and/or in component **B** in an amount of between 2 and 15 wt.-%, in particular between 4 and 10 wt.-%, based on component **B,** most preferred in both components **A** and **B.**

In exemplary embodiments, the at least one plasticizer **PL** is selected from adipic acid based plasticizers, such as doctyladipate (or bis (2-ethylhexyl) hexanedioate), phthalate based plasticizers, such as di-isononyl phthalate, phosphorus containing plasticizers, silicon oil, and hydrocarbon plasticizers.

Suitable hydrocarbon plasticizers are commercially available, for example, from Exxon Mobil under the trade name of Isopar^{®}.

In preferred embodiments, the curable polymeric binder composition, in particular the multiple-component polyurethane composition may contain 2.5 - 35 wt.-%, preferably 5 - 30 wt.-%, more preferably 10 - 25 wt.-% of the at least one plasticizer **PL,** based on the total composition.

In especially preferred embodiments, the curable polymeric binder composition, in particular the multiple-component polyurethane composition, comprises the least one plasticizer **PL** in component **A** in an amount of between 10 and 30 wt.-%, based on component **A** and/or in component **B** in an amount of between 5 and 20 wt.-%, based on component **B,** most preferred are embodiments with plasticizer **PL** in both components **A** and **B.**

In exemplary embodiments, the curable polymeric binder composition, in particular the multiple-component polyurethane composition comprises a mixture of two plasticizers in either one or both components A and **B,** said mixture preferably containing at least one adipate- or phthalate- based plasticizer **PL1** and at least one hydrocarbon plasticizer **PL2,** wherein the weight ratio of the plasticizers **PL1** and **PL2** is in the range of 7:1 to 1:1, preferably 5:1 to 1:1, more preferably 4:1 to 2:1, based on the total composition.

In especially preferred embodiments, the curable polymeric binder composition, in particular the multiple-component polyurethane composition further comprises at least one light-weight filler **LF.** The term "light-weight filler" refers in the present disclosure to powder materials having low density, such as an apparent (skeletal) density of not more than 1.0 g/cm³, particularly not more than 0.9 g/cm³.

Generally, the density of powder materials can be determined based on different definitions for the volume occupied by the particles of the material. A "true density" refers to the ratio of the mass and the "true volume" of a sample, excluding the volume of the open pores, closed pores, and the inter-particle voids. An "apparent density", also known as "skeletal density", is calculated based on the skeletal volume of the particles, excluding both the open pores and inter-particle voids. A "bulk density" of a powder material is calculated as the mass of the particles per unit volume after the particles have freely filled a standard container under specific conditions thus including the closed pores, open pores, and inter-particle voids. True density and apparent density can be measured using both gas and liquid displacement methods. In a gas displacement method, typically helium, gas is employed instead of liquid to measure the sample volume.

Suitable light-weight fillers for use in the curable polyurethane composition include, particularly, microspheres, especially hollow microspheres such as those based on glass, ceramic, or plastic materials. Further suitable light-weight fillers include, for example, spheres, granules, and beads based on expanded glass, polystyrene, expanded perlite, expanded volcanic ash, expanded vermiculite, pumice, and scoria as well as cenospheres.

The term "cenospheres" refers in the present disclosure to a lightweight, inert, hollow spheres made largely of silica oxide and alumina oxide and filled with air or inert gas. Cenospheres are typically produced as a coal combustion byproduct at thermal power plants.

Suitable light-weight fillers for use in the curable polymeric binder composition in particular the multiple-component polyurethane composition are commercially available, for example, from 3M under the trade name of 3M^{®} Glass Bubbles (hollow glass spheres); from AkzoNobel under the trade name of Expancel^{®} (expanded thermoplastic spheres); from Omya under the trade name of FILLITE^{®} (cenospheres); from Trelleborg under the trade name of ECCOSPHERES^{®} (hollow glass spheres), from Potters Industries Inc under the trade name of Q-CEL^{®} or SPHERICEL^{®}.

In the context of the present disclosure, the terms "sphere", "bead", and "granule" are used without reference to the geometrical shape of the filler. Consequently, a "hollow glass sphere" does not necessarily have a shape of a symmetrical sphere and a "granule" can be provided in form of a sphere.

In embodiments, the at least one light-weight filler **LF** has an apparent density determined by gas displacement pycnometer according to ISO 12154:2014 standard of not more than 0.6 g/cm³, preferably not more than 0.5 g/cm³, more preferably not more than 0.45 g/cm³, even more preferably not more than 0.4 g/cm³, still more preferably not more than 0.35 g/cm³.

The use of the light-weight fillers **LF** has surprisingly been found to enable reducing the density of the cured polymeric binder composition, in particular the cured multiple-component polyurethane composition without having a significant negative impact on important material properties, especially thermal and chemical stability, elasticity, and toughness of the composition.

Consequently, the suggested the curable polymeric binder composition, in particular the multiple-component polyurethane composition enables production of large-scale 3D objects by additive manufacturing having a relatively low weight. Such 3D printed objects can be provided as prefabricated articles, which can be easily transported to a place of use using conventional transportation means.

In embodiments, the light-weight filler **LF** is present in the curable polymeric binder composition, in particular the multiple-component polyurethane composition in form of finely divided particles, such as having a median particle size d₅₀ of not more than 1000 µm, preferably not more than 500 µm, more preferably not more than 350 µm, even more preferably not more than 150 µm.

The term "median particle size d₅₀" refers in the present disclosure to a particle size below which 50 % of all particles by volume are smaller than the d₅₀ value. The particle size distribution may be measured, for example, by a laser diffraction method according to ISO 13320:2009 standard, particularly, using a dry dispersion method, where the particles are dispersed in air.

In exemplary embodiments, at least one light-weight filler **LF** has a median particle size d₅₀ measured according to ISO 13320:2009 standard of 1 - 500 µm, preferably 5 - 250 µm, more preferably 5 - 150 µm, even more preferably 10 - 100 µm, still more preferably 10 - 75 µm.

Particularly, the at least one light-weight filler **LF** may be selected from hollow glass spheres, expanded glass spheres, hollow ceramic spheres, cenospheres, and hollow alumina beads, especially from hollow glass spheres, expanded glass spheres, and cenospheres.

The proportion of the light-weight filler **LF** preferably makes up at least 0.5 wt.-%, particularly at least 1.5 wt.-% of the total weight of the curable polymeric binder composition, in particular the multiple-component polyurethane composition.

In embodiments, the curable polymeric binder composition, in particular the multiple-component polyurethane composition comprises 2.5 - 35 wt.-%, preferably 5 - 30 wt.-%, more preferably 10 - 25 wt.-%, of the light-weight filler **LF.**

The curable polymeric binder composition, in particular the multiple-component polyurethane composition may still comprise at least one further filler **F,** which is different from the light-weight filler **LF,** particularly having a significantly higher apparent density than the light-weight filler **LF.** In embodiments, the further filler **F** has an apparent density determined by gas displacement pycnometer according to ISO 12154:2014 standard of at least 1.0 g/cm³, preferably at least 1.5 g/cm³.

Suitable further fillers **F** include inorganic fillers, such as, particularly, natural, ground or precipitated calcium carbonate, which are optionally coated with fatty acids, particularly with stearic acid, barite, talc, quartz flour, quartz sand, dolomites, wollastonite, kaolin, calcined kaolin, mica (potassium aluminum silicate), aluminum oxide, aluminum hydroxide, magnesium hydroxide, silicic acids including highly dispersed silicas from pyrolysis processes, industrially produced carbon blacks, graphite, metal powders such as aluminum, copper, iron, silver or steel.

The at least one further filler **F,** if contained in the curable polymeric binder composition, in particular the multiple-component polyurethane composition, may preferably be selected from the group consisting of calcium carbonate, carbon black, kaolin, barite, talc, quartz powder, dolomite, wollastonite, kaolin, calcined kaolin and mica.

In exemplary embodiments, the curable polymeric binder composition, in particular the multiple-component polyurethane composition contains at least one further filler **F** selected from ground and precipitated calcium carbonate, and calcined kaolin.

The further filler **F,** if used, may be present in the curable polymeric binder composition, in particular the multiple-component polyurethane composition in a proportion of 0.5 - 20 wt.-%, preferably 1.5 - 15 wt.-%, more preferably 2.5 - 10 wt.-%, based on the total weight of the composition. Filler F may be present in either one or both of components **A** and **B.**

An especially preferred curable polymeric binder composition is a two-component polyurethane composition.

Preferably, the first component **A** of this two-component polyurethane composition comprises, based on component **A:**
- between 25 wt.-% and 50 wt.-%, preferably between 30 wt.-% and 40 wt.-% of said polyol **PO** as described above, in particular a tetra- or higher functional polyol containing at least one tertiary amine group, preferably one or two tertiary amine groups;
- between 0.1 wt.-% and 4 wt.-%, preferably between 0.25 wt.-% and 3 wt.-%, more preferably between 0.5 wt.-% and 2 wt.-% of said latent curing agent **CA** as described above, in particular a polyamine with a melting point at standard pressure of between 50 °C and 150 °C;
- between 10 wt.-% and 30 wt.-% of at least one plasticizer **PL** as described above, in particular a phthalate or adipate-based plasticizer and/or a hydrocarbon plasticizer;
- between 5 wt.-% and 30 wt.-% of at least one filler **F** as described above, in particular a chalk and/or kaolin filler;
- between 5 wt.-% and 30 wt.-%, in particular between 10 wt.-% and 20 wt.-% of at least one light-weight filler **LF** as described above, in particular hollow glass microspheres;
- between 2 wt.-% and 20 wt.-%, in particular between 4 wt.-% and 15 wt.-% of at least one rheology modifier **RM** as described above, in particular surface modified fumed silica, especially hydrophobic fumed silica;
- an optionally further ingredients.

Preferably, the second component **B** of this two-component polyurethane composition comprises, based on component **B**:
- between 40 wt.-% and 80 wt.-%, preferably between 50 wt.-% and 70 wt.-% of said polyisocyanate **PI** as described above, in particular MDI or a mixture of MDI and MDI homologs (polymeric MDI or PMDI) or a mixture of MDI and oligomers, polymers or derivatives derived therefrom;
- between 5 wt.-% and 20 wt.-% of at least one plasticizer **PL** as described above, in particular a phthalate or adipate-based plasticizer and/or a hydrocarbon plasticizer;
- between 5 wt.-% and 30 wt.-%, in particular between 10 wt.-% and 20 wt.-% of at least one light-weight filler **LF** as described above, in particular hollow glass microspheres;
- between 2 wt.-% and 20 wt.-%, in particular between 4 wt.-% and 15 wt.-% of at least one rheology modifier **RM** as described above, in particular surface modified fumed silica, especially hydrophobic fumed silica;
- an optionally further ingredients.

The components of the curable polymeric binder composition, in particular the multiple-component polyurethane composition, particularly first component A and the second component **B,** are preferably produced separately and especially with the exclusion of moisture. The individual components are typically each stored in a separate container or in a separate compartment of a container and are only mixed with one another on or immediately prior to use. Suitable containers for storing of the components include, for example, a vat, a hobbock, a bag, a bucket, a can, a cartridge or a tube.

Particularly, the components of the curable polymeric binder composition, in particular of the multiple-component polyurethane composition are storage-stable, meaning that they can be stored prior to use for several months up to one year or longer, without any change in their respective properties to a degree of relevance to their use.

In some preferred embodiments, the discharge nozzle has an exit opening having an equivalent spherical diameter of at least 3 mm, preferably at least 10 mm, more preferably at least 20 mm. The use and method according to the present invention allows for printing large scale objects with high layer thickness.

In the same or other preferred embodiments, the print line thickness measured in direction that is essentially perpendicular to plane of the applied layer is at least 2 mm, preferably at least 5 mm, more preferably at least 10 mm.

In preferred embodiments, said multi-axis additive manufacturing device comprises a mixer for mixing the two or more components of the curable polymeric binder composition, a movable print head having a discharge nozzle in fluid communication with the mixer, and optionally a build plate, wherein the manufacturing device further comprises actuators coupled to the discharge nozzle configured to move the discharge nozzle across the X, Y, and Z spatial axes and further actuators coupled to the discharge nozzle or the build plate (configured to move the discharge nozzle or the building plate across the A and B and/or C rotational axes.

Another aspect of the present invention is a method for producing a three-dimensional object comprising the steps of:
- providing a curable polymeric binder composition, in particular a multiple-component polyurethane composition, as described above;
- mixing the first component **A** and the second component **B** and optionally component **C** with each other in a mixer to produce the curable polymeric binder composition, and
- applying the curable polymeric binder composition layer-by-layer using a movable print head of an additive manufacturing device to prepare a shaped body from a cured polyurethane composition,

Wherein the additive manufacturing device is a multi-axis additive manufacturing device, and
wherein the curable polymeric binder composition exiting from the discharge nozzle has a viscosity between 3000 and 50000 Pa·s, preferably 4000 and 30000 Pa·s, more preferably 5000 and 20000 Pa·s, and preferably has a measured sagging resistance class higher than 3, more preferably higher than 2, wherein
- the viscosity is measured 5 seconds after the composition exits the discharge nozzle on a plate-plate rheometer at a constant temperature of 20°C and 50% relative humidity;
- the sagging resistance class is determined according to the method described in the description.

More specifically and in particular, the viscosity as described above is measured 5 seconds after the composition exits the discharge nozzle on a thermostated plate-plate rheometer with a plate diameter of 25 mm and a plate spacing of 2.7 mm at a circular frequency of 6 rad s-1 (0.95 Hz), amplitude gamma 0.2% and a constant temperature of 20°C and 50% relative humidity.

The shaped body produced from the cured binder composition can have almost any desired shape and it may have a solid form or a hollow form, with or without a base.

In some embodiments, the total height of the shaped body, particularly the sum of the thicknesses of all individual layers of the shaped body may be at least 5 cm, particularly at least 25 cm, especially at least 50 cm.

In other embodiments, the total height of the shaped body, particularly the sum of the thicknesses of all individual layers of the shaped body may be at least 50 cm, particularly at least 100 cm, especially at least 200 cm.

In embodiments, the shaped body is a hollow object having an inner and an outer surface and a wall thickness defined between the inner and outer surfaces, in particular the highest thickness in case of an uneven wall, of, for example at least 3 mm, preferably at least 5 mm, particularly at least 10 mm more preferably at least 20 mm.

In exemplary embodiments, the shaped body is a non-hollow or solid object having, for example, a thickness of 5 - 300 mm, preferably 10 - 250 mm, more preferably 20 - 200 mm and/or a total height of at least 10 cm, preferably at least 30 cm, more preferably at least 50 cm.

The shaped body can be used as the 3D object or it can be subjected to further processing steps, such as to one or more mechanical or chemical treatment steps, for example, to change the surface properties of the shaped body. Such surface treatments can involve polishing, in particular abrasive polishing, grinding, or sanding, or abrasive chemical treatment.

It is also possible to add more of the same or a different curable polymeric binder composition to the surface of the 3D object to even out surface roughness or to modify the shape in any way desired.

Such aftertreatment(s) may be especially preferred if the method is used for providing 3D objects with desired surface properties, for example, objects having a low surface roughness, such as moulds having smooth inner surface to enable easy separation of the mold from the cured body.

In embodiments, the method for producing a 3D object comprises a further step of subjecting at least a portion of a surface of the shaped body to a mechanical treatment step to reduce surface roughness.

In further embodiments, the shaped body is an object, optionally a partially hollow object, particularly having a wall thickness of 3 - 300 mm, preferably 5 - 250 mm, more preferably 10 - 200 mm and/or a total height of at least 10 cm, preferably at least 30 cm, more preferable at least 50 cm, wherein the method for producing a 3D object comprises a further step of subjecting at least a portion of the inner or outer surface of the object, optionally the partially hollow object, to a mechanical treatment step to reduce surface roughness.

The mechanical treatment step can be conducted, for example, by using at least one of cutting, sawing, milling, threading, water jet or laser treatment, grinding, brushing, polishing, and abrasive blasting means.

In embodiments, the 3D object produced by using the method is a mold, such as a prepreg mold.

The method for producing a 3D object of the present invention is an additive manufacturing process, particularly a generative free space process, where a curable polymeric binder composition, in particular a curable polyurethane composition obtained by mixing of the components of the curable polymeric binder composition, in particular the multiple-component composition with each other is applied layer-by-layer using a print head of an additive manufacturing device, particularly a 3D printer, to form a shaped body from a cured polymeric binder composition, in particular polyurethane composition.

The height of a single layer, typically measured in a direction essentially perpendicular to the planes formed by single layers, especially in vertical direction, is preferably 2 mm to 200 mm, more preferably 5 mm to 150 mm, even more preferably 10 mm to 100 mm.

The printhead of the additive manufacturing device is preferably movable in at least one, especially two or three spatial directions and/or preferably in one to three rotational directions. Particular preference is given to a printhead movable in three spatial directions and two rotational directions. This allows to produce shaped bodies of virtually any shape in a particularly simple manner.

The movement of the printhead can especially be achieved by mounting the printhead on a conventional robot arm movable in one, two or three spatial directions and/or one or two rotational directions. The additive manufacturing device can be of any type, such as a robotic arm or a 4 to 6-axis gantry robot system.

The components of the curable polymeric binder composition, in particular the first component **A** and the second component **B** as well as any further components and/or additives can be conveyed to the mixer, for example, via one or more conveying devices, especially pumps and conveying conduits. The conveying devices are especially controllable by means of a control unit, particularly independently of one another.

In embodiments, the components of the curable polymeric binder composition, in particular the multiple-component polyurethane composition, particularly the first component **A** and the second component **B,** are conveyed via separate supply lines to the mixer.

The mixing upstream of or within the 3D printer in the method of the invention is typically effected by means of static mixers or with the aid of dynamic mixers. Preferred are dynamic mixers. In the mixing, it should be ensured that the two components are mixed with maximum homogeneity. If the components are mixed incompletely, local deviations from the advantageous mixing ratio will occur, which can result in a deterioration in the mechanical properties of the three-dimensional object.

The mixer used for mixing of the components of the curable polymeric binder composition, in particular the multiple-component polyurethane composition with each other can be a static or dynamic mixer or a combination of these. Furthermore, the mixer is preferably mounted on the print head of the additive manufacturing device. The printhead preferably has a discharge nozzle for the layer-by-layer application of the curable polymeric binder composition.

The discharge nozzle shapes the material discharged at the discharge opening. The shape of the discharge nozzle is not particularly restricted. The discharge nozzle may have a rectangular, square or a round shape. The diameter of the discharge nozzle is likewise not particularly restricted. In the case of very small diameters and simultaneously high viscosity of the composition, higher pressures are needed for extrusion. It has been found to be advantageous to use nozzles having exit openings having diameters of at least 3 mm, preferably at least 5 mm, especially at least 10 mm more preferably at least 20 mm. There may also be further shaping elements mounted in the discharge nozzle, such as wave- or zigzag-forming elements or smoothing elements.

In embodiments, the discharge opening may also be larger, up to a several centimeters. This allows the application of large beads or layers of the curable polymeric binder composition, where these beads or layers may have thicknesses or diameters of several centimeters or more. The curable polymeric binder composition, in particular the multiple-component polyurethane composition used in the inventive method, even in large layers or volumes, cures homogeneously and rapidly.

The average dwell (residence) time of the curable polymeric binder composition, in particular the curable polyurethane composition in the mixer is preferably at least 2 seconds, preferably at least 4 s and/or not more than 60 seconds, preferably not more than 120 seconds.

The average dwell time of the curable polymeric binder composition, in particular the curable polyurethane composition in the mixer is the average period for which a particle dwells in the mixer, from inlet to outlet.

In embodiments, the shaped body is a board, particularly a design, styling, model, tooling, or a foundry tooling board, especially for making of models, prototypes, tools, foundry patterns, cold core boxes, and moulds, for example, for use in automotive, marine and aeronautics industries.

### Examples

The following materials in Table 1 were used in the examples.

| | | |
|---|---|---|
| Lupranol 3508 | Tetrafunctional polyol with two tertiary amine groups, hydroxyl value 740 mg KOH/g, molecular weight 292 g/mol | BASF |
| Desmophen 4050 E | Tetrafunctional polyol with two tertiary amine groups, hydroxyl value 620 mg KOH/g, OH equivalent weight approx. 91 g | Covestro |
| Anamine^{®} 2014AG | Modified aliphatic polyamine adduct; amine value 180-190 | Evonik |
| Plastomoll^{®} DOA | Bis(2-ethylhexyl) hexaned ioate | BASF |
| DIDP | Diisodecyl phthalate | Exxon Mobil |
| Isopar^{®} M | Hydrocarbon oil plasticizer | Exxon Mobil |
| BYK 085 | Silicone-containing leveling additive | BYK |
| BYK 141 | Silicone-free defoamer additive | BYK |
| BYK A-500 | Silicone-free de-aerator additive | BYK |
| Omya^{®} BL | Ultra fine calcium carbonate | Omya |
| Sylosiv A3 | Zeolite powder, 3Å pore size | W.R. Grace |
| Microspheres S 22 | Hollow glass spheres, true density 0.22 g/cm³, d₅₀ median size 35 µm | 3M |
| Microspheres K 25 | Hollow glass spheres, true density 0.25 g/cm³, d₅₀ median size 55 µm | 3M |
| Microspheres K20HS | Hollow glass spheres, true density 0.20 g/cm³ | 3M |
| Q-CEL^{®} 5028K | Hollow glass spheres, true density 0.25 g/cm³, average size 75 µm | Potters Europe |
| Cab-O-SIL^{®} 720 | Hydrophobic fumed silica | Cabot |
| Siliporite^{®} SA 1720 | Molecular sieve (zeolite) | Arkema |
| Desmodur^{®} 44 V 20 L NP | liquid, polymeric isocyanate based on diphenylmethane-4,4'-diisocyanate (MDI), NCO content 30.5 - 32.5 wt.-% | Covestro |
| Voranate^{®} M 229 | Polymeric isocyanate based on diphenylmethane-4,4'-diisocyanate, average functionality 2.7 | Dow |

### Preparation of components A and B

For each tested curable polyurethane composition, the ingredients shown in Table 2 below for component A were processed in the stated amounts by means of a vacuum speed mixer at the speed of 2350 rpm under vacuum to form a homogeneous paste. The ingredients of the second component B indicated in Table 3 were processed in the same manner.

**Table 2: Example components A. All numbers in wt.-%, based on the respective component A. * not according to the invention.**

| **Component A** | **A1 *** | **A2** | **A3** | **A4** | **A5** | **A6** | **A7** |
|---|---|---|---|---|---|---|---|
| Desmophen 4050 E | 40.0 | - | - | - | - | - | - |
| Lupranol 3508 | - | 35.0 | 34.5 | 34.5 | 33.5 | 32.59 | 35.5 |
| Ancamine 2014FG | - | - | 0.85 | 0.9 | 1.0 | 1.08 | 0.8 |
| Plastomoll DOA | 16.0 | 12.5 | 12.0 | - | - | - | - |
| DIDP | - | - | - | 12.0 | 12.0 | 24.20 | 21.2 |
| Isopar M | 12.0 | 10.0 | 11.5 | 11.0 | 11.0 | - | - |
| BYK 085 | 0.2 | 0.2 | - | - | - | - | - |
| Omya BL | 7.1 | 11.8 | 8.5 | 8.6 | 10.0 | 10.83 | 20.0 |
| Sylosiv A3 | - | - | 5.15 | 5.5 | 5.5 | 5.22 | - |
| Microspheres S 22 | 8.2 | 9.5 | 10.0 | - | 10.0 | - | - |
| Microspheres K 25 | - | - | - | 11.0 | - | - | - |
| Microspheres K20HS | - | - | - | - | - | 9.84 | 9.0 |
| Q-CEL 5028K | 6.7 | 8.0 | 9.0 | 8.0 | 8.5 | 8.37 | 9.5 |
| Cab-O-SIL 720 | 9.5 | 13.0 | 8.5 | 8.5 | 8.5 | 7.88 | 4.0 |

**Table 3: Example components B. All numbers in wt.-%, based on the respective component B. * not according to the invention.**

| **Component B** | **B1 *** | **B2** | **B3** | **B4** | **B5** | **B6** | **B7** |
|---|---|---|---|---|---|---|---|
| Desmodur 44 V 20 L NP | 59.50 | 58.7 | 61.0 | 61.0 | 60.5 | 60.5 | - |
| Voranate M 229 | - | - | - | - | - | - | 66.7 |
| Plastomoll DOA | 15.07 | 15.0 | 14.3 | - | - | - | - |
| DIDP | - | - | - | 14.5 | 13.0 | 13.0 | 7.5 |
| BYK 141 | 0.19 | 0.2 | 0.1 | - | - | - | - |
| BYK A-500 | 0.19 | 0.2 | 0.1 | - | - | - | - |
| Siliporite SA 1720 | 6.14 | 3.9 | - | - | - | - | - |
| Microspheres S 22 | 7.84 | 8.0 | 9.0 | 9.0 | 11.0 | - | - |
| Microspheres K 25 | - | - | - | - | - | 11.0 | 10.0 |
| Q-CEL 5028K | 6.24 | 6.5 | 8.0 | 8.0 | 8.0 | 8.0 | 8.8 |
| Cab-O-SIL 720 | 4.82 | 7.5 | 7.5 | 7.5 | 7.5 | 7.5 | 7.0 |

### Viscosity and pot life tests with examples AB1 to AB7

The components A of Table 2 and the components B of Table 3 were each prepared my homogeneously mixing the respective ingredients of each component A or B as detailed in the Tables and each stored in an airtight cartridge.

Viscosity measurements were done by using a double-cartridge application gun equipped with a static mixer. For this, the cartridge of each corresponding component A was inserted into the double cartridge gun together with each corresponding component B, for example A1 with B1, thus forming mixed composition AB1. Mixing ratio (volumetric) was in each experiment A:B = 1:1 (v/v).

The **initial viscosity** of each mixed composition was measured 5 seconds after the composition exits the static mixer on a thermostated plate-plate rheometer Anton Paar Rheoplus MCR302 with a plate diameter of 25 mm and a plate spacing of 2.7 mm at a circular frequency of 6 rad s-1 (0.95 Hz), amplitude gamma 0.2% and a constant temperature of 20°C and 50% relative humidity.

**Pot life** was determined as the time until the mixed composition reached a viscosity of 70000 Pa·s.

The results of this measurements are summarized in Table 4 for each mixed composition.

### Sagging resistance tests with examples AB1 to AB7

The components A of Table 2 and the components B of Table 3 were each prepared my homogeneously mixing the respective ingredients of each component A or B as detailed in the Tables and each stored in an airtight cartridge.

**Sagging resistance** measurements were done by using a double-cartridge application gun equipped with a static mixer. For this, the cartridge of each corresponding component A was inserted into the double cartridge gun together with each corresponding component B, for example A1 with B1, thus forming mixed composition AB1. Mixing ratio (volumetric) was in each experiment A:B = 1:1 (v/v). The outlet tip of the gun had an opening such that a triangular bead can be applied, which was cut out from a round opening tip using pliers.

For the measurement, a sheet of cardboard was attached to a wall in a fully upright (vertical) position. A bead of composition with triangular cross-section was applied onto the vertical cardboard surface. The bead had a length of 2 cm, a width of 8 mm, and a height (tip of triangle) of 10 mm (see Figure 1 below, where x denotes the width (x = 8mm) and y denotes the height (y = 10mm).

The applied bead was kept in this position for 2 minutes, then its appearance judged and classified according to the conditions stated below.

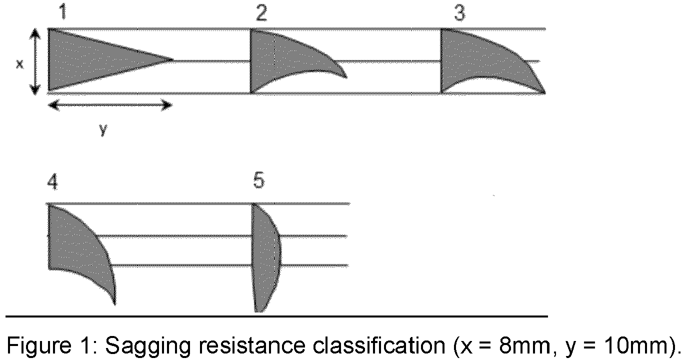

Classification of sagging resistance (Figure 1):
- 1 - Excellent: Tip did not move
- 2 - Good: Tip between center and base axis (displacement < x/2)
- 3 - Fair: Tip at the height of base axis (displacement = x/2)
- 4 - Poor: Tip below base axis (displacement > x/2)
- 5 - Bad: No tip anymore, complete sagging

The results (sagging resistance rating 1 to 5 according to above list) of each experiment AB1 to AB7 are summarized in Table 4.

**Table 4: Test results of example components AB. * not according to the invention.**

| **Composition AB** | **AB1 *** | **AB2** | **AB3** | **AB4** | **AB5** | **AB6** | **AB7** |
|---|---|---|---|---|---|---|---|
| Component A | A1 * | A2 | A3 | A4 | A5 | A6 | A7 |
| Component B | B1 * | B2 | B3 | B4 | B5 | B6 | B7 |
| Initial viscosity [Pa·s] | 2470 | 5497 | 3917 | 4637 | 6947 | 8070 | 6264 |
| Pot life [min] | 3.6 | 2.4 | 2.2 | 2.2 | 1.4 | 2.4 | 1.4 |
| Sagging resistance [-] | 4 | 2 | 3 | 2 | 2 | 1 | 2 |

### 3D printing test with compositions AB1 to AB7

In the printing tests, a 3D printer comprising a dynamic-static mixer 1336 with a length of 26 cm and a cylindrical print nozzle having a length of 12.4cm, an inner diameter of 22 mm, and an outer diameter of 30 mm arranged on a 6-axis 3D print robot KUKA KR 60 robot was used. The employed control system was KR 60 KRC 4, the slicing software used to generate printable Q-Code for KR60 KRC 4 was AI Build.

The components A and B of the tested composition were each filled into separated hobbocks of a screw pumping systems NODOPOX 20, which was integrated into the 3D printer. The components were mixed in the dynamic-static mixer of the 3D printer at a volume ratio of 1:1 and fed through the print nozzle at a total flow rate of 0.1 - 2.6 L/min. The total dwell (residence) time of the composition in the static-dynamic mixer and in the print head (nozzle) was about 1-30 seconds.

Compositions of AB1 to AB7 were printed into multi-layer pyramid objects having dimensions of 20 cm x 20 cm x 25 cm (width, length, height) using a printing line thickness of 7.5 mm and width of about 35 mm, respectively. The print speed was 130-160 mm/s.

In printing tests of compositions AB2 to AB7, it was observed that the mixed composition of A and B applied using the print head was thixotropically and dimensionally stable enabling printing of 3D objects using high printing (head) speeds of > 120 mm/s.

All objects printed with compositions AB2 to AB7 were fully according to the specified model and remained fully stable during and after the printing process.

Example AB1, however, already during printing showed severe sagging, and the printed object partially collapsed after completion of the printing process.

The curing behavior of the mixed curable polyurethane composition was generally such that the curing of a previous layer was not completed when the subsequent layer was already applied on top of it. This facilitated good interlayer bonding between the successive layers. After 2 minutes of application of the last layer, the whole respective 3D- printed objects from compositions AB2 to AB7 turned fully rigid and formed a dry skin, which shows proper curing of the respective composition.

## Claims

1. Use of a curable polymeric binder composition for the manufacture of 3D articles by an additive manufacturing process comprising applying the curable polymeric binder composition with a movable print head of multi-axis additive manufacturing device, the movable print head having a discharge nozzle for the layer-by-layer application of the curable polymeric binder composition, wherein the curable polymeric binder composition exiting from the discharge nozzle has a viscosity between 3000 and 50000 Pa·s, preferably 4000 and 30000 Pa·s, more preferably 5000 and 20000 Pa·s, wherein
the viscosity is measured 5 seconds after the composition exits the discharge nozzle on a plate-plate rheometer at a constant temperature of 20°C and 50% relative humidity.

2. Use according to claim 1, wherein the multi-axis additive manufacturing device is a five-axis or six-axis additive manufacturing device.

3. Use according to any one of previous claims, wherein the curable polymeric binder composition exiting from the discharge nozzle has a measured sagging resistance class higher than 3, more preferably higher than 2, wherein the sagging resistance class is determined according to the method described in the description.

4. Use according to any one of previous claims, wherein the curable polymeric binder composition is selected from multi-component compositions based on reactive polyurethane compositions, reactive epoxy resin compositions, reactive silicone compositions, or reactive (meth)acrylate compositions.

5. Use according to any one of previous claims, wherein the curable polymeric binder composition is obtained by mixing a first component **A** with a second component **B** and optionally with a third component **C** in a mixer, which is in fluid communication with the discharge nozzle.

6. Use according to any one of previous claims, wherein the pot life of the curable polymeric binder composition exiting from the discharge nozzle is at most 5 times, preferably at most 3 times, more preferably at most 2 times, as long as the layer cycle time, wherein the pot life is defined as the time during which the curable polymeric binder composition after exiting the discharge nozzle reaches a viscosity of 70000 Pa·s, and wherein the cycle time is the time that passes until an additional portion or layer of curable polymeric binder composition is applied onto a previously deposited portion or layer of curable polymeric binder composition.

7. Use according to any one of previous claims, wherein the discharge nozzle has an exit opening having an equivalent spherical diameter of at least 3 mm, preferably at least 5 mm, especially at least 10 mm, more preferably at least 20 mm.

8. Use according to any one of previous claims, wherein the print line thickness measured in direction that is essentially perpendicular to plane of the applied layer is at least 2 mm, preferably at least 5 mm, more preferably at least 10 mm.

9. Use according to any one of claims 4-8, wherein the reactive binder composition is a reactive polyurethane composition comprising a first component **A** and a second component **B,** wherein the first component **A** comprises:
a2) At least one polyol **PO** having an average hydroxyl number determined according to ISO 4629-2:2016 standard of 350 - 1500 mg KOH/g, preferably 450 - 1000 mg KOH/g and preferably having a number average molecular weight (Mₙ), determined by gel permeation-chromatography (GPC) using polystyrene as standard, in the range of 150 - 15000 g/mol, preferably 250 - 12000 g/mol;
and the second component **B** comprises:
b2) At least one aromatic polyisocyanate **PI.**

10. Use according to claim 9, wherein the at least one polyol **PO** is a tetra- or higher functional polyol containing at least one tertiary amine group, preferably one or two tertiary amine groups.

11. Use according to claim 9 or 10, wherein the first component **A** comprises at least 10 wt.-%, preferably at least 20 wt.-%, in particular at least 30 wt.-% of the at least one polyol **PO,** based on component **A.**

12. Use according to any one of claims 4-11, wherein the first component **A** and/or the third component **C** comprises at least one latent curing agent **CA,** preferably a latent polyamine curing agent.

13. Use according to claim 12, wherein the latent curing agent **CA** has an activation temperature of at least 50 °C, preferably at least 65 °C.

14. Use according to claim 12 or 13, wherein the latent curing agent **CA** is selected from non-modified and modified aromatic and cycloaliphatic polyamines, preferably from non-modified and modified aromatic and cycloaliphatic polyamine adducts.

15. Use according to any one of claims 12-14, wherein the latent curing agent **CA** is an epoxy adduct of an aliphatic polyamine having at least one secondary amine group.

16. Use according to any one of claims 9-15, wherein the at least one polyol **PO** is a compound of formula (I) 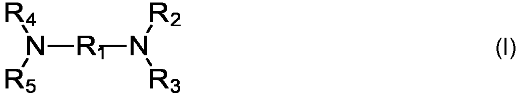
where R₁ represents a linear or branched alkyl group with 2 to 12 carbon atoms, preferably 2 to 8 carbon atoms and
R₂, R₃, R₄, and R₅ each represent linear or branched alkyl group with 2 to 18 carbon atoms, preferably 2 to 12 carbon atoms, substituted with one or more hydroxy groups and optionally containing one or more ether groups.

17. Use according to any one of claims 9-16, wherein the proportion of the at least one polyol **PO** makes up at least 50 wt.-%, preferably at least 75 wt.-%, in particular 100% of the total weight of all polyols contained in the first component **A.**

18. Use according to any one of claims 9-17, wherein the at least one aromatic polyisocyanate **PI** is selected from monomeric di- and triisocyanates and oligomers, polymers, and derivatives of monomeric di- and triisocyanates, and mixtures thereof.

19. Use according to any one of claims 9-18, wherein the at least one aromatic polyisocyanate **PI** has an isocyanate content determined according to ISO 11909:2007 standard of 15 - 50 wt.-%, preferably 20 - 45 wt.-% and/or a viscosity determined according to ISO 3219-1:2021 standard of 100 - 500 mPa·s, preferably 150 - 400 mPa·s and/or an average isocyanate functionality determined according to ISO 14896-2009 standard method A of 2.0 - 4.0, preferably 2.2 - 3.8.

20. Use according to any one of claims 9-19, wherein the at least one aromatic polyisocyanate **PI** is selected from monomers, oligomers, polymers, and derivatives of methylene diphenyl diisocyanate (MDI) and monomers, oligomers, polymers, and derivatives of toluene diisocyanate (TDI), wherein the proportion of monomers of methylene diphenyl diisocyanate (MDI) and/or proportion of monomers of toluene diisocyanate (TDI) preferably is not more than 50 wt.-%, in particular not more than 35 wt.-%, based on the total weight of the at least one aromatic polyisocyanate **PI.**

21. Use according to any one of claims 9-20, wherein the molar ratio of all isocyanate groups in the second component **B** to all hydroxyl groups in the first component **A** is in the range of 0.8 - 1.5, preferably 0.9 - 1.2.

22. Use according to any of the previous claims, wherein said multi-axis additive manufacturing device comprises a mixer for mixing the two or more components of the curable polymeric binder composition, a movable print head having a discharge nozzle in fluid communication with the mixer, and optionally a build plate, wherein the manufacturing device further comprises actuators coupled to the discharge nozzle configured to move the discharge nozzle across the X, Y, and Z spatial axes and further actuators coupled to the discharge nozzle or the build plate configured to move the discharge nozzle or the building plate across the A and B and/or C rotational axes.
